# EUROPEAN PATENT SPECIFICATION

(11) **EP 4 015 792 B1**
(45) Date of publication and mention of the grant of the patent: **26.03.2025**
(21) Application number: 20215169.2
(22) Date of filing: 17.12.2020
(51) Int. Cl.: F01P 7/04, F01P 5/02, F04D 13/06, B60K 1/00, B60K 11/00, F04D 29/16, F04D 29/44, F04D 17/16

(54) **APPARATUS AND METHOD FOR COOLING COMPONENTS OF A HEAVY-DUTY ELECTRIC VEHICLE**
VORRICHTUNG UND VERFAHREN ZUM KÜHLEN VON KOMPONENTEN EINES SCHWERLASTELEKTROFAHRZEUGS
APPAREIL ET PROCÉDÉ DE REFROIDISSEMENT DES COMPOSANTS D'UN VÉHICULE ÉLECTRIQUE LOURD

(43) Date of publication of application: 22.06.2022
(73) Proprietor: VOLVO TRUCK CORPORATION, 405 08 Göteborg (SE)
(72) Inventor: LIMA, Marcos, 422 50 Göteborg (SE); AARTS, Marcel, 448 33 Floda (SE)
(74) Representative: Zacco Sweden AB

(56) References cited:
- EP-A1- 2 944 786
- WO-A1-01/10537
- DE-A1- 102016 008 150
- US-A1- 2007 272 173

## Description

### TECHNICAL FIELD

The present disclosure relates to a cooling system, in particular a cooling system for an electric or hybrid electric vehicle. Although the invention will be described mainly with respect to heavy-duty vehicles such as trucks, the invention is not restricted to this particular type of vehicle but may also be used in other types of vehicles.

### BACKGROUND

Electric vehicles lack a combustion engine but still comprise a plurality of components in need of cooling. For instance, battery packs and fuel cell arrangements require cooling, as well as most forms of electric machines. Power circuitry and other electronics often also require cooling in order not to over-heat. Heat generation may be a significant performance limiting factor in a heavy duty vehicle.

A cooling arrangement normally comprises some form of fan system arranged to generate a flow of cooling air. In vehicles equipped with an internal combustion engines, the fan system may be driven by the motor via, e.g., the crankshaft. However, for vehicles equipped with electric motors such as battery powered electric vehicles, fuel cell vehicles or PHEV (Plug-in Hybrid Electric Vehicles), this is no longer an option. The fans may then be driven by separate motors powered from low voltage sources, such as 24V sources.

CN111219239 discloses a cooling arrangement for a vehicle, in which the fan comprised in the cooling arrangement is driven by an electric motor connected to a high voltage power supply. Likewise, US2013239913 and US2013261832 disclose cooling arrangements wherein a fan is supplied with power from a main traction energy source of an electric vehicle. Still, there is a need for improved cooling arrangements for electric vehicles.

The space available for installing cooling arrangements is limited in most vehicles. This applies in particular to the space behind the front grille in heavy duty vehicles. There is a need for more compact cooling arrangements.

A further problem related to cooling arrangements in heavy duty vehicles are the time constants involved in the cooling process. It takes time to cool down vehicle components once they have reached high temperatures. It is desired to speed up this cooling process in order to maintain a more stable vehicle component temperature.

DE 10 2016 008150 A1 discloses a drive train for a vehicle which comprises wheel-end electric motors and at least one fan arranged to cool the motors. Axial flux electric motors are used to power the fans, resulting in an efficient cooling.

WO 01/10537 A1 discloses an air delivery device for cooling components of a heavy-duty electric or hybrid electric vehicle, comprising a fan, a mounting means, and an axial flux electric motor or disc motor.

US 2007/272173 A1 discloses a vehicle cooling system comprising a coolant thermostat, a radiator, a coolant pump, an engine fan and an oil cooler. There is also disclosed methods for controlling the cooling system in dependence of parameters such as vehicle speed and characteristics of the vehicle path in order to minimize energy consumption.

EP 2944786 A1 discloses a method for controlling the cooling system of a vehicle in dependence of parameters such as vehicle speed and characteristics of the vehicle path using an artificial neural network. This control provides a more efficient cooling.

### SUMMARY

It is an object of the present disclosure to provide methods, control units and vehicles which alleviate at least some of the above-mentioned issues and provide efficient cooling for electric and/or hybrid electric vehicles, as well as for vehicles powered by fuel cell arrangements.

This object is at least in part achieved by a cooling arrangement for cooling components of a heavy-duty electric or hybrid electric vehicle. The cooling arrangement comprises a fan, a mounting means, and an electric motor. The electric motor is an axial flux electric motor. The axial flux electric motor is a powerful and efficient type of electric machine which can be designed with a small form factor, particularly in the axial direction, i.e., an axial flux electric motor can be made flat. The disclosed cooling arrangements can be compactly designed to fit into the often small spaces available, e.g., behind the vehicle front grille. These compact cooling arrangements still provide a high cooling capacity due to the efficiency of the axial flux electric motor.

According to some aspects, the axial flux electric motor is arranged to be driven by a high voltage power supply, preferably a power supply with an output voltage of 400 V or more. This means that the motor can be conveniently powered directly from the traction energy source on the vehicle, e.g., the main electrical energy storage (ESS) system of the vehicle, without complicated electrical voltage transformation or other power circuitry adaptations. This high voltage also permits an efficient and powerful motor which enables an improved cooling capacity.

According to other aspects, the fan is a fan arrangement comprising a centrifugal fan assembly, an impeller, a stationary inlet shroud, and a stator comprising a plurality of stator blades located radially or semi-radially outside the impeller. This centrifugal fan assembly can be designed to fit into a limited volume in the motor axial direction, i.e., behind a vehicle front grille or the like, which is an advantage.

According to further aspects, the cooling arrangement comprises an interface arranged to accept control input from a control unit and alter an operational parameter of the cooling arrangement in dependence of said control input. This way the operation of the motor can be adapted to the current and future cooling needs of the vehicle systems, which is an advantage. For instance, the control input can control the cooling arrangement in dependence of an upcoming road characteristic. This means that extra cooling can be generated if the vehicle is approaching an up-hill drive, thereby preventing performance issues related to over-heating. This is particularly beneficial if the vehicle is heavily laden, in which case maximum vehicle performance may be required in order to negotiate a hilly stretch of road.

The above-mentioned object is also obtained by a method performed in a control unit for controlling the operation of the cooling arrangements disclosed herein. The method comprises obtaining a predicted cooling requirement for a future time t, calculating an operational parameter of the cooling arrangement such that the generated cooling effect meets the predicted cooling requirement, and applying the calculated operational parameter to the cooling arrangement. This way the cooling of the vehicle systems and components is adapted to future needs, driven by future driving scenarios. Thus, for instance, if the vehicle is about to enter an up-hill stretch of road, then the cooling needs are expected to increase and the motor is thus accelerated to increase the cooling effect. This cooling boost can be applied before the particular stretch of road is reached in a predictive manner, which is an advantage. Thus, a more even temperature can be maintained in the different vehicle systems in need of cooling, and overall vehicle performance can be increased.

Obtaining a predicted cooling requirement for the future time may comprise obtaining information about a speed of the vehicle at the future time and using a heat estimation model to estimate the amount of heat generated at the future time based on the speed of the vehicle. Obtaining a predicted cooling requirement for the future time may also comprise obtaining information about a characteristic of the path of the vehicle, such as a rate of incline or descent at the future time and using a heat estimation model to estimate the amount of heat generated at the future time based on the characteristic of the path of the vehicle.

The heat estimation model can be adjusted in dependence of information about the amount of heat generated during prior operation of the vehicle. Thus, the prediction is made based on historical data obtained during a previous vehicle maneuver, and therefore becomes more accurate since the heat estimation is tailored to a specific vehicle or vehicle type.

According to aspects, calculating an operational parameter of the cooling arrangement comprises using a cooling model. The cooling model is a model of the relation between the operational parameter of the cooling arrangement and a generated cooling effect. This means that the method can be specifically adapted to a given vehicle, or to a given vehicle type. The cooling model can also be adjusted to account for vehicle characteristics such as vehicle load and driving conditions. The cooling model can also be adjusted in dependence of information about the cooling effect generated during prior operation of the vehicle. Thus a more accurate prediction is obtained which leads to a more efficient cooling system overall.

There is also disclosed herein control units and vehicles associated with the above discussed advantages. There is furthermore disclosed herein server system configured to maintain vehicle models for use in improved cooling arrangements.

### BRIEF DESCRIPTION OF THE DRAWINGS

With reference to the appended drawings, below follows a more detailed description of embodiments of the invention cited as examples. In the drawings:
- Figure 1: shows an example of a heavy-duty vehicle;
- Figure 2: schematically illustrates a cooling arrangement;
- Figure 3: schematically illustrates an axial flux motor;
- Figure 4 A,B: show a mounting means for a fan arrangement;
- Figure 5: shows a fan arrangement;
- Figure 6: illustrates an example driving scenario;
- Figure 7: is a flow chart illustrating methods;
- Figure 8: schematically illustrates a control unit; and
- Figure 9: shows an example computer program product.

### DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

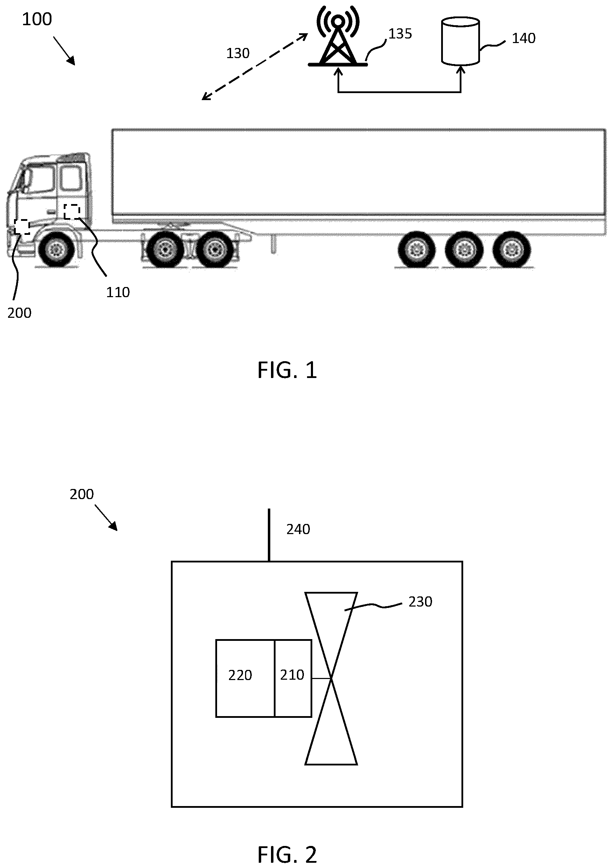

Figure 1 shows an example heavy-duty electric or hybrid electric vehicle 100. The vehicle 100 may, for instance, be powered by a battery pack and/or by a fuel cell arrangement. The vehicle may also comprise a combustion engine, i.e., be a hybrid electric vehicle. An electric or hybrid-electric vehicle comprises at least one electric machine arranged to drive one or more of the wheels of the vehicle. An electric or hybrid-electric vehicle also comprises at least one energy storage system (ESS) arranged to power the electric machine or machines, i.e., a battery, a fuel cell, a super-capacitor, or a combination thereof.

The vehicle 100 may comprise a central main traction machine configured to drive two or more wheels, e.g., via a differential. Separate electric machines may also be arranged to drive respective wheels. Such electrical machines are referred to herein as wheel-end traction machines.

Herein, a heavy-duty vehicle 100 is taken to be a vehicle designed for the handling and transport of heavier objects or large quantities of cargo or passengers. As an example, a heavy-duty vehicle could be a semi-trailer vehicle or a truck as described above. As another example, a heavy-duty vehicle could be a vehicle designed for use in construction or farming. A heavy-duty vehicle could also be a bus.

The vehicle 100 is also shown to comprise a control unit 110, which will be described in more detail below. Furthermore, the vehicle comprises a cooling arrangement 200 for cooling one or more parts of the vehicle, such as the one or more electric machines, the ESS, or other components. Both the control unit 110 and the cooling system 200 are only schematically illustrated in Figure 1.

Figure 2 shows an example of a cooling arrangement 200 for cooling components of a heavy-duty electric or hybrid electric vehicle 100. The cooling arrangement 200 comprises a fan 230, a mounting means 210, and an electric motor 220. Notably, the electric motor 220 is an axial flux electric motor.

An axial flux electric motor (also known as an axial gap motor, or pancake motor) is a geometry of motor construction where the gap between the rotor and stator, and therefore the direction of magnetic flux between the two, is aligned parallel with the axis of rotation, rather than radially as with the concentric cylindrical geometry of the more common radial gap motor. Thus, in an axial flux electric motor, the magnetic flux is directed along the rotational axis of the rotor.

Although this geometry has been used since the first electromagnetic motors were developed, its usage was rare until the widespread availability of strong permanent magnets and the development of brushless DC motors, which could better exploit some of the advantages of the axial geometry. The axial geometry can be applied to almost any operating principle (e.g. brushed DC, induction, stepper, reluctance) that can be used in a radial motor, and can allow some topologies that would not be practical in a radial geometry, but even for the same operating principle there are considerations in the application and design that would cause one geometry to be more suitable than the other.

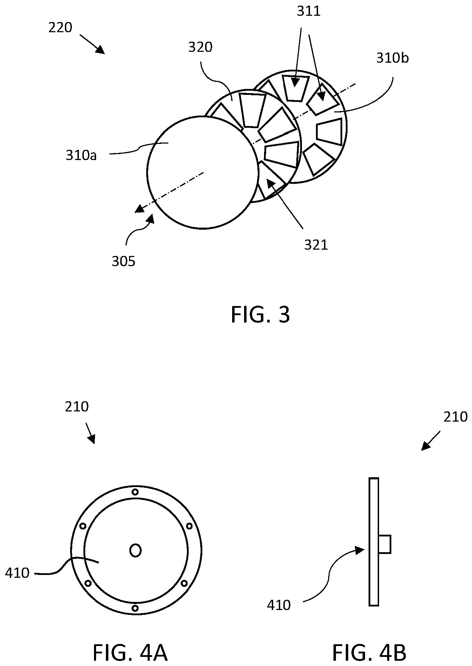

Figure 3 schematically illustrates an example axial flux electric motor 220 comprising at least one rotor 310a, 310b and at least one stator 320. The stator 320 comprises at least one stator winding 321. The stator windings 321 comprise a winding or coil of electrically conductive material arranged to operate as an electromagnet. Herein, the term electrically conductive material is used to refer to a material such as copper or silver, or with an electric conductivity substantially above 10000 (Ωm)⁻¹. The stator windings may also comprise a ferromagnetic core.

The rotor 310a, 310b normally comprises at least one permanent magnet 311. The permanent magnet may comprise ferromagnetic materials such as iron, nickel, cobalt, or a neodymium alloy. Although Figure 3 shows two rotors, an axial flux electric motor may have a larger or smaller number of rotors.

The rotor and the stator in an axial flux electric motor may be thought of as discs, i.e. substantially circular objects with a radius, where the thickness of the disc is smaller than the radius, i.e., a pancake shape. The rotor and stator are placed next to each other with the axis of rotation 305 of the rotor perpendicular to the surface of both discs. During operation, the magnetic flux between rotor and stator will then be parallel to the axis of rotation 305.

Compared to radial flux electric motors, in which the magnetic flux is perpendicular to the axis of rotation of the rotor, axial flux electric motors can be constructed to have a higher power density, i.e., an axial flux motor may be physically smaller than a radial flux motor capable of generating a similar amount of power. This is an advantage in applications such as the present one where the amount of space available in the fan axial direction is limited.

The cooling arrangement 200 may be arranged to cool any component that generates or is exposed to excessive heat during operation of the vehicle. As an example, it may be arranged to cool a main traction machine or a wheel-end traction machine, the ESS, or any other heat-sensitive components on the vehicle.

According to aspects, the axial flux electric motor 220 may be arranged to be driven by a high voltage power supply, preferably a power supply with an output voltage of 400 V or more. The high voltage power supply may be the main traction energy source of the vehicle. This way the often significant energy storage capacity of the vehicle can be re-used to also power the cooling system, which is an advantage. It is also an advantage to make use of the available high voltage in an electric vehicle, since this high voltage allows for a more powerful fan operation and therefore a higher cooling capacity.

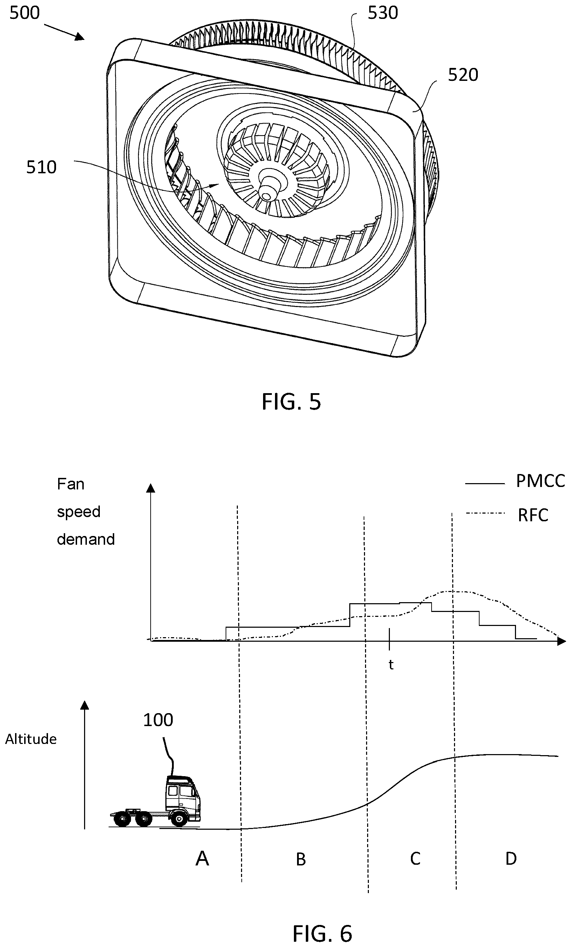

Figures 4A and 4B illustrate an example mounting means 210 comprising a flat surface 410 arranged to reduce air leakage. Figure 4A is a front view and Figure 4B is a side view. A fan assembly, such as the fan assembly shown in Figure 5, can be attached to the motor 220 by the mounting means 210.

As an example, the fan 230 may be an axial flow fan. As another example, the fan 230 may be a centrifugal flow fan or a cross-flow fan.

Figure 5 shows a perspective view of an example fan arrangement 500 comprising a fan assembly 510, a stationary inlet shroud 520 and a stator 530. The stator 530 may comprise a plurality of stator blades located radially or semi-radially outside the impeller 540. The stationary inlet shroud 520 serves to guide air towards the fan assembly 510, reducing leakage of air. Such a fan arrangement is, e.g., described in WO2015005832A1. The present cooling arrangements are particularly suitable for use with the types of fans described in WO2015005832A1, since the combination yields a particularly effective cooling arrangement with very small foot-print, at least in the axial direction of the fan, since the package can be made flat to conserve space in the axial direction of the fan and motor.

According to aspects, the cooling arrangement may also comprise an interface 240, schematically illustrated in Figure 2, arranged to accept control input from a control unit 110 and alter an operational parameter of the cooling arrangement in dependence of said control input. The interface 240 may comprise one or more transmitters and receivers, comprising analogue and digital components and a suitable number of ports for wireline or wireless communication.

According to one example, an operational parameter may be the fan speed of rotation or drive torque. According to another example, the operational parameter may be an output power of the electric motor 220, or a drawn current by the electric motor 220. These parameters affect the amount of cooling provided by the cooling arrangement, since they affect the flow of cooling air generated by the cooling arrangement.

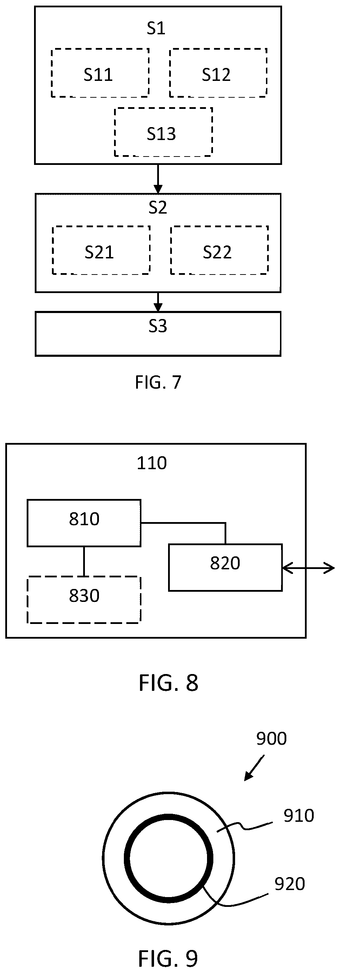

There is also herein disclosed herein a method for predictive master cooling control (PMCC) exemplified by the flow chart in Figure 7. The method, performed in the control unit 110, controls the operation of the cooling arrangement 200 described above. The method comprises obtaining S1 a predicted cooling requirement for a future time t and calculating S2 an operational parameter of the cooling arrangement such that the generated cooling effect meets the predicted cooling requirement. The method also comprises applying S3 the calculated operational parameter to the cooling arrangement 200.

The predicted cooling requirement represents a future need for cooling by the vehicle 100 as it traverses some planned driving path. A steep climb is normally associated with a larger cooling requirement compared to a more level road. A long downhill drive may also be associated with an increased cooling need, in particular by the electric machines of the vehicles if these are used for braking the vehicles.

The cooling effect is the cooling generated by the cooling arrangement. Increased cooling effect can, for instance, be generated by driving the fan at a higher speed or torque. A reduced cooling effect can be obtained by reducing fan speed or torque. The fan may also be turned off for periods of time when no significant cooling effect is required.

The predicted cooling requirement may be obtained as a predicted amount of heat generated by a component that the cooling arrangement 200 is arranged to cool, measured, e.g., in Joules or some similar quantity. The predicted amount of heat generated by the component may be obtained from a heat estimation model arranged to estimate the amount of heat generated by the component under different operating conditions. In this case, conditions could for example refer to different vehicle speeds or road inclines and varying vehicle load, but also weather conditions such as ambient temperature. The heat estimation model is a mathematical model, such as a look-up table (LUT) or function which takes a number of input parameters such as vehicle speed and vehicle load, road incline, and so on, and determines a prediction of generated heat. This type of model can, e.g., be initialized by computer simulation and testing, and then updated in field to better suit a given vehicle or vehicle type. Thus, as an example, the heat estimation model may comprise a lookup table comprising measured or precalculated values of the amount of heat generated by some vehicle component. As another example, the heat estimation model may comprise a mathematical function representing the relationship between a parameter such as vehicle speed or road incline and the amount of heat generated. As a third example, the heat estimation model may comprise a machine learning model such as a neural network. This machine learning model may be trained to represent a given vehicle or a given vehicle type by operating the vehicle during varying driving conditions, road altitude profiles, and loads. The actual generated heat can be measured and used to adjust the neural network to better predict generated heat based on the available input data.

It is advantageous if the heat estimation model can obtain predicted values of for example the vehicle speed or road incline for a future time t. These values could be obtained from a traffic situation management (TSM) unit or path planning module such as a navigation unit with access to maps and other information about the upcoming stretch of road. Generally, a TSM unit plans vehicle operation with a time horizon of, e.g., 10-60 seconds. This time frame for instance corresponds to the time it takes for the vehicle to negotiate a curve, i.e., to transition from driving straight to entering the curve and then exiting the curve again, or driving up a hill. A path planning module can also provide information related to a planned path by the vehicle, as well as associated altitude profiles of the path, road conditions, speed limits, and so on.

The heat estimation model may be adjusted in dependence of a parameter describing the vehicle. A parameter describing the vehicle may for example be the vehicle weight or current load. The heat estimation model may be adjusted during vehicle operation by measuring generated heat in dependence of vehicle parameters such as load and road condition.

According to aspects, obtaining S1 a predicted cooling requirement for a future time t may also comprise obtaining information about a speed of the vehicle at the future time t and using a heat estimation model to estimate S11 the amount of heat generated at the future time t based on the speed of the vehicle. As an example, if the component that the cooling arrangement 200 is arranged to cool is a main traction machine or a wheel-end traction machine, an increase in vehicle speed normally means a higher motor output power, which may lead to a higher cooling requirement. Conversely, a reduction in the vehicle speed may lead to a lower cooling requirement. This may, however, not always be the case. For instance, an electric machine used for braking during down-hill driving can be expected to generate a significant amount of heat.

According to other aspects, obtaining a predicted cooling requirement for a future time t may comprise obtaining information about a characteristic of the path of the vehicle at the future time t and using a heat estimation model to estimate S11 the amount of heat generated at the future time t based on the characteristic of the path of the vehicle.

As mentioned above, a characteristic of the path of the vehicle may for example be a road incline or slope, a change in direction of the vehicle path, or a property of the road surface such as if it is an asphalt road or a dirt road.

Figure 6 shows an example driving scenario and a requested fan speed, or fan speed demand, during the driving scenario. In this scenario the component that the cooling arrangement 200 is arranged to cool is a component that generates additional heat when the vehicle 100 encounters an incline, such as a main traction machine or a wheel-end traction machine.

At the beginning of the driving scenario, in section A of Figure 6, the vehicle 100 travels across substantially flat ground. The requested fan speed remains low both for an example temperature-driven regular fan control (RFC) method indicated by a dash-dotted line, and with a predictive PMCC method indicated by a solid line, i.e., the method illustrated in Figure 7. Here, regular fan control is taken to mean conventional methods of controlling a cooling arrangement, comprising e.g., obtaining input from temperature sensors and adjusting the fan speed in dependence of the measured temperature.

In section B the vehicle drives up a slope. According to the method above the resulting increase in the cooling requirement is anticipated, resulting in a higher PMCC fan speed demand before the vehicle 100 enters section B. In section C the vehicle 100 drives up a steeper slope. At a time t, which in Figure 6 corresponds to the time when the vehicle 100 is driving up the steepest part of the slope, the fan speed demand from PMCC is at a maximum. In section D the vehicle is again driving across substantially flat ground and the PMCC fan speed demand is rapidly lowered.

This way, by proactively generating cooling before the temperature actually rises, over-heating is more efficiently prevented by the cooling system. This, in turn, means that vehicle performance does not become temperature-limited as easily as if the cooling arrangement is controlled using the RFC type of methods.

In addition to the heat estimation model, it may also be possible to measure the amount of heat generated by a component of the vehicle 100 under different driving conditions. For example, the vehicle may be equipped with temperature sensors arranged in proximity to the component. The heat estimation model can then be altered or adjusted in such a way that the difference between the measured and estimated amount of heat generated by the component is reduced. The heat estimation model may thus be adjusted S13 in dependence of information about the amount of heat generated during prior operation of the vehicle. For example, if the predicted amount of generated heat is always below the actual generated heat, then the heat estimation model can be adjusted to reduce the discrepancy. Similarly, if the predicted amount of generated heat is constantly above the actual generated heat, the heat estimation model can be adjusted to predict a lower generated amount of heat.

For instance, the heat estimation model may be implemented as any of a Kalman filter, a particle filter, or a neural network.

Alternatively, data on heat generation may be collected from a plurality of vehicles, for example vehicles of a similar type or equipped with similar components and stored in a data storage unit such as a server. Referring again to Figure 1, the vehicle may be connected to the server 140 via a wireless connection 130 to a base station 135. The collected data may then be used to improve a heat estimation model that is subsequently redistributed to the vehicle. For example, the server 140 may maintain a plurality of machine learning models which are regularly updated, i.e., trained, based on the data received from vehicle. The updated machine learning models can then be fed back to the vehicles, thereby improving the predictive cooling operation.

According to other aspects, calculating an operational parameter of the cooling arrangement comprises using a cooling model S21, the cooling model being a model of the relation between the operational parameter of the cooling arrangement and a generated cooling effect.

As an example, the cooling model may comprise a lookup table comprising measured or precalculated values of the cooling effect for different values of the operational parameter of the cooling arrangement. As another example, the cooling model may comprise a mathematical function describing the relationship between the operational parameter of the cooling arrangement and the cooling effect. As a third example, the cooling model may comprise a machine learning model such as a neural network.

As with the generated heat, the cooling effect of the cooling arrangement may be measured during operation of the vehicle, for example using temperature sensors arranged in proximity to the cooling arrangement, air flow sensors, and the like. The measured cooling effect may then be used to improve the cooling model by adjusting the cooling model to reduce the difference between the estimated and measured cooling effect in a manner similar to the heat estimation model discussed above. Thus, the method may also comprise adjusting S22 the cooling model in dependence of information about the cooling effect generated during prior operation of the vehicle.

Information about the cooling effect of a cooling arrangement 200 may also be collected for a plurality of vehicles 100 comprising cooling arrangements 200 and stored in a data storage unit such as a server. Referring again to Figure 1, the vehicle may be connected to the server 140 via a wireless connection 130 to a base station 135. The information may be used to improve a cooling model that can subsequently be used in any vehicle of the plurality of vehicles. This way cooling data can be collected from a plurality of different sources and used to build a model of cooling needs and cooling efficiency in various driving scenarios.

A vehicle 100 may be arranged to upload data associated with component temperatures and the like in different driving scenarios to the server 140, and optionally also receive updated models from the server 140. The uploaded data may, e.g., comprise vehicle speed, road incline angle, vehicle load and so on, along with temperatures of the different vehicle components being cooled. The server 140 may use this data to adjust models for predicting cooling requirements in different scenarios. The server 140 can maintain, e.g., trained neural networks for a plurality of different vehicle types, where each neural network is configured to take driving scenario as input and generate a predicted cooling requirement as output. These trained neural networks can be downloaded to vehicles in order to improve control of cooling operations.

There is also herein disclosed a control unit 110 comprising processing circuitry 910 configured to perform a method as described above. There is also disclosed a heavy-duty vehicle 100 comprising such a control unit and a cooling arrangement 200 as previously described

Figure 8 schematically illustrates, in terms of a number of functional units, the components of a control unit 110 according to embodiments of the discussions and methods disclosed herein. This control unit 110 may be comprised in the vehicle 100, e.g., in the form of a vehicle motion management (VMM) unit. Processing circuitry 810 is provided using any combination of one or more of a suitable central processing unit CPU, multiprocessor, microcontroller, digital signal processor DSP, etc., capable of executing software instructions stored in a computer program product, e.g. in the form of a storage medium 830. The processing circuitry 810 may further be provided as at least one application specific integrated circuit ASIC, or field programmable gate array FPGA.

Particularly, the processing circuitry 810 is configured to cause the control unit 110 to perform a set of operations, or steps, such as the methods discussed in connection to Figure 7. For example, the storage medium 830 may store the set of operations, and the processing circuitry 810 may be configured to retrieve the set of operations from the storage medium 830 to cause the control unit 110 to perform the set of operations. The set of operations may be provided as a set of executable instructions. Thus, the processing circuitry 810 is thereby arranged to execute methods as herein disclosed.

The storage medium 830 may also comprise persistent storage, which, for example, can be any single one or combination of magnetic memory, optical memory, solid state memory or even remotely mounted memory.

The control unit 110 may further comprise an interface 820 for communications with at least one external device, such as an electric machine, a cooling arrangement or a gearbox. As such the interface 820 may comprise one or more transmitters and receivers, comprising analogue and digital components and a suitable number of ports for wireline or wireless communication.

The processing circuitry 810 controls the general operation of the control unit 110, e.g., by sending data and control signals to the interface 820 and the storage medium 830, by receiving data and reports from the interface 820, and by retrieving data and instructions from the storage medium 830. Other components, as well as the related functionality, of the control node are omitted in order not to obscure the concepts presented herein.

Figure 9 illustrates a computer readable medium 910 carrying a computer program comprising program code means 920 for performing, e.g., the methods illustrated in Figure 7, when said program product is run on a computer. The computer readable medium and the code means may together form a computer program product 900.

## Claims

1. A heavy-duty electric or hybrid electric vehicle (100) comprising a cooling arrangement (200), the cooling arrangement (200) comprising a fan (230), a mounting means (220), and an electric motor (210), wherein the electric motor (210) is an axial flux electric motor,
the fan (230) being a fan arrangement (500) comprising a centrifugal fan assembly (510), an impeller (540), a stationary inlet shroud (520), and a stator (530) comprising a plurality of stator blades located radially or semi-radially outside the impeller (540),
the vehicle (100) further comprising a control unit (110) arranged to control the cooling arrangement, the control unit (110) comprising predicting means arranged to obtain a predicted cooling requirement of the vehicle (100) for a future time (t), wherein obtaining a predicted cooling requirement comprises obtaining information about a speed of the vehicle (110) at a future time (t) and using a heat estimation model to estimate the amount of heat generated at the future time (t) based on the speed of the vehicle, and / or obtaining information about a characteristic of a path of the vehicle at the future time (t) and using a heat estimation model to estimate the amount of heat generated at the future time (t) based on the characteristic of the path of the vehicle.

2. The vehicle (100) according to claim 1, wherein the axial flux electric motor (210) is arranged to be driven by a high voltage power supply, preferably a power supply with an output voltage of 400 V or more.

3. The vehicle (100) according to claim 2, wherein the high voltage power supply is the main traction energy source of the vehicle (100).

4. The vehicle (100) according to any previous claim, wherein the mounting means (220) comprise a flat surface (410) arranged to reduce air leakage.

5. The vehicle (100) according to any previous claim, wherein the cooling arrangement comprises an interface (240) arranged to accept control input from the control unit (110) and alter an operational parameter of the cooling arrangement in dependence of said control input.

6. The vehicle (100) according to claim 5, wherein the operational parameter is any of a fan speed, electric motor speed, or electric motor torque.

7. A method in a control unit for controlling the operation of a cooling arrangement in a heavy-duty electric or hybrid electric vehicle (100), the control unit comprising predicting means arranged to predict a cooling requirement of the vehicle (100), where the cooling arrangement (200) comprises a fan (230), a mounting means (220), and an electric motor (210), wherein the electric motor (210) is an axial flux electric motor, the fan (230) being a fan arrangement (500) comprising a centrifugal fan assembly (510), an impeller (540), a stationary inlet shroud (520), and a stator (530) comprising a plurality of stator blades located radially or semi-radially outside the impeller, the method comprising:
obtaining (S1) a predicted cooling requirement of the vehicle (100) for a future time (t); wherein
obtaining (S1) a predicted cooling requirement for the future time (t) comprises obtaining information (S12) about a speed of the vehicle (100) at the future time (t) and using a heat estimation model to estimate (S11) an amount of heat generated at the future time (t) based on the speed of the vehicle (100); and/or
obtaining (S1) a predicted cooling requirement for the future time (t) comprises obtaining information (S12) about a characteristic of the path of the vehicle (100) at the future time (t) and using the heat estimation model to estimate (S11) the amount of heat generated at the future time (t) based on the characteristic of the path of the vehicle (100);
calculating (S2) an operational parameter of the cooling arrangement such that the generated cooling effect when using the operational parameter meets the predicted cooling requirement; and
applying (S3) the calculated operational parameter to control the cooling arrangement.

8. The method according to claim 7, wherein the heat estimation model is adjusted (S13) in dependence of information about the amount of heat generated during a prior operation of the vehicle.

9. The method according to any of claim 7 or 8, wherein calculating an operational parameter of the cooling arrangement comprises using (S21) a cooling model, the cooling model being determined as a model of the relation between the operational parameter of the cooling arrangement and a generated cooling effect

10. The method according to claim 9, wherein the cooling model is adjusted (S22) in dependence of information about the cooling effect generated during a prior operation of the vehicle.

11. A control unit comprising predicting means arranged to predict a cooling requirement of a vehicle (100), the control unit comprising processing circuitry (810) configured to perform a method according to any of claims 7 to 10.

## Patentansprüche

1. Schwerlasteelektro- oder -hybridelektrofahrzeug (100), umfassend eine Kühlanordnung (200), wobei die Kühlanordnung (200) einen Lüfter (230), eine Montageeinrichtung (220) und einen Elektromotor (210) umfasst, wobei der Elektromotor (210) ein Axialfluss-Elektromotor ist,
wobei der Lüfter (230) eine Lüfteranordnung (500) ist, die eine Radiallüfterbaugruppe (510), ein Laufrad (540), eine stationäre Einlassabdeckung (520) und einen Stator (530) umfasst, der eine Vielzahl von Statorschaufeln umfasst, die radial oder halbradial außerhalb des Laufrads (540) angeordnet sind,
wobei das Fahrzeug (100) ferner eine Steuereinheit (110) umfasst, die dazu angeordnet ist, die Kühlanordnung zu steuern, wobei die Steuereinheit (110) Vorhersageeinrichtungen umfasst, die dazu angeordnet sind, einen vorhergesagten Kühlbedarf des Fahrzeugs (100) für einen zukünftigen Zeitpunkt (t) zu erhalten, wobei das Erhalten eines vorhergesagten Kühlbedarfs Erhalten von Informationen über eine Geschwindigkeit des Fahrzeugs (110) zu einem zukünftigen Zeitpunkt (t) und Verwenden eines Wärmeschätzmodells zum Schätzen der Wärmemenge, die zu dem zukünftigen Zeitpunkt (t) erzeugt werden wird, basierend auf der Geschwindigkeit des Fahrzeugs und/oder Erhalten von Informationen über eine Eigenschaft einer Fahrtstrecke des Fahrzeugs zu dem zukünftigen Zeitpunkt (t) und Verwenden eines Wärmeschätzmodells zum Schätzen der Wärmemenge, die zu dem zukünftigen Zeitpunkt (t) erzeugt werden wird, basierend auf der Eigenschaft der Fahrtstrecke des Fahrzeugs umfasst.

2. Fahrzeug (100) nach Anspruch 1, wobei der Axialfluss-Elektromotor (210) dazu angeordnet ist, von einer Hochspannungsstromversorgung, vorzugsweise einer Stromversorgung mit einer Ausgangsspannung von 400 V oder mehr, angetrieben zu werden.

3. Fahrzeug (100) nach Anspruch 2, wobei die Hochspannungsstromversorgung die Hauptantriebsenergiequelle des Fahrzeugs (100) ist.

4. Fahrzeug (100) nach einem der vorhergehenden Ansprüche, wobei die Montageeinrichtung (220) eine flache Oberfläche (410) umfasst, die dazu angeordnet ist, Luftleckverluste zu verringern.

5. Fahrzeug (100) nach einem der vorhergehenden Ansprüche, wobei die Kühlanordnung eine Schnittstelle (240) umfasst, die dazu angeordnet ist, eine Steuereingabe von der Steuereinheit (110) anzunehmen und einen Betriebsparameter der Kühlanordnung in Abhängigkeit von der Steuereingabe zu ändern.

6. Fahrzeug (100) nach Anspruch 5, wobei der Betriebsparameter ein beliebiger aus einer Lüftergeschwindigkeit, einer Elektromotorgeschwindigkeit oder einem Elektromotordrehmoment ist.

7. Verfahren in einer Steuereinheit zum Steuern des Betriebs einer Kühlanordnung in einem Schwerlastelektro- oder - hybridelektrofahrzeug (100), wobei die Steuereinheit Vorhersageeinrichtungen umfasst, die dazu angeordnet sind, einen Kühlbedarf des Fahrzeugs (100) vorherzusagen, wobei die Kühlanordnung (200) einen Lüfter (230), eine Montageeinrichtung (220) und einen Elektromotor (210) umfasst, wobei der Elektromotor (210) ein Axialfluss-Elektromotor ist, wobei der Lüfter (230) eine Lüfteranordnung (500) ist, die eine Radiallüfterbaugruppe (510), ein Laufrad (540), eine stationäre Einlassabdeckung (520) und einen Stator (530) umfasst, der eine Vielzahl von Statorschaufeln umfasst, die radial oder halbradial außerhalb des Laufrads angeordnet sind, wobei das Verfahren Folgendes umfasst:
Erhalten (S1) eines vorhergesagten Kühlbedarfs des Fahrzeugs (100) für einen zukünftigen Zeitpunkt (t); wobei das Erhalten (S1) eines vorhergesagten Kühlbedarfs für den zukünftigen Zeitpunkt (t) Erhalten von Informationen (S12) über eine Geschwindigkeit des Fahrzeugs (100) zu dem zukünftigen Zeitpunkt (t) und Verwenden eines Wärmeschätzmodells zum Schätzen (S11) einer Wärmemenge, die zu dem zukünftigen Zeitpunkt (t) erzeugt werden wird, basierend auf der Geschwindigkeit des Fahrzeugs (100) umfasst; und/oder das Erhalten (S1) eines vorhergesagten Kühlbedarfs für den zukünftigen Zeitpunkt (t) Erhalten von Informationen (S12) über eine Eigenschaft der Fahrtstrecke des Fahrzeugs (100) zu dem zukünftigen Zeitpunkt (t) und Verwenden des Wärmeschätzmodells zum Schätzen (S11) der Wärmemenge, die zu dem zukünftigen Zeitpunkt (t) erzeugt werden wird, basierend auf der Eigenschaft der Fahrtstrecke des Fahrzeugs (100) umfasst;
Berechnen (S2) eines Betriebsparameters der Kühlanordnung derart, dass die erzeugte Kühlwirkung bei Verwenden des Betriebsparameters den vorhergesagten Kühlbedarf erfüllt; und
Anwenden (S3) des berechneten Betriebsparameters, um die Kühlanordnung zu steuern.

8. Verfahren nach Anspruch 7, wobei das Wärmeschätzmodell in Abhängigkeit von Informationen über die Wärmemenge, die während eines vorherigen Betriebs des Fahrzeugs erzeugt wurde, angepasst wird (S13).

9. Verfahren nach einem der Ansprüche 7 oder 8, wobei das Berechnen eines Betriebsparameters der Kühlanordnung Verwenden (S21) eines Kühlmodells umfasst, wobei das Kühlmodell als ein Modell der Beziehung zwischen dem Betriebsparameter der Kühlanordnung und einer erzeugten Kühlwirkung bestimmt wird.

10. Verfahren nach Anspruch 9, wobei das Kühlmodell in Abhängigkeit von Informationen über die Kühlwirkung, die während eines vorherigen Betriebs des Fahrzeugs erzeugt wurde, angepasst wird (S22).

11. Steuereinheit, umfassend Vorhersageeinrichtungen, die dazu angeordnet sind, einen Kühlbedarf eines Fahrzeugs (100) vorherzusagen, wobei die Steuereinheit eine Verarbeitungsschaltung (810) umfasst, die dazu konfiguriert ist, ein Verfahren nach einem der Ansprüche 7 bis 10 durchzuführen.

## Revendications

1. Véhicule électrique lourd ou véhicule électrique hybride (100) comprenant un agencement de refroidissement (200), l'agencement de refroidissement (200) comprenant un ventilateur (230), un moyen de montage (220) et un moteur électrique (210), dans lequel le moteur électrique (210) est un moteur électrique à flux axial,
le ventilateur (230) étant un agencement de ventilateur (500) comprenant un ensemble de ventilateur centrifuge (510), une turbine (540), un carénage d'entrée stationnaire (520) et un stator (530) comprenant une pluralité d'aubes de stator situées radialement ou semi-radialement à l'extérieur de la turbine (540),
le véhicule (100) comprenant en outre une unité de commande (110) agencée pour commander l'agencement de refroidissement, l'unité de commande (110) comprenant un moyen de prédiction agencé pour obtenir un besoin de refroidissement prédit du véhicule (100) pour un temps futur (t), dans lequel l'obtention d'un besoin de refroidissement prédit comprend l'obtention d'informations sur une vitesse du véhicule (110) à un temps futur (t) et l'utilisation d'un modèle d'estimation de chaleur pour estimer la quantité de chaleur générée au temps futur (t) sur la base de la vitesse du véhicule, et/ou l'obtention d'informations sur une caractéristique d'un trajet du véhicule au temps futur (t) et l'utilisation d'un modèle d'estimation de chaleur pour estimer la quantité de chaleur générée au temps futur (t) sur la base de la caractéristique du trajet du véhicule.

2. Véhicule (100) selon la revendication 1, dans lequel le moteur électrique à flux axial (210) est agencé pour être entraîné par une alimentation électrique haute tension, de préférence une alimentation électrique avec une tension de sortie de 400 V ou plus.

3. Véhicule (100) selon la revendication 2, dans lequel l'alimentation électrique haute tension est la principale source d'énergie de traction du véhicule (100).

4. Véhicule (100) selon l'une quelconque des revendications précédentes, dans lequel le moyen de montage (220) comprend une surface plane (410) agencée pour réduire les fuites d'air.

5. Véhicule (100) selon l'une quelconque des revendications précédentes, dans lequel l'agencement de refroidissement comprend une interface (240) agencée pour accepter une entrée de commande provenant de l'unité de commande (110) et modifier un paramètre opérationnel de l'agencement de refroidissement en fonction de ladite entrée de commande.

6. Véhicule (100) selon la revendication 5, dans lequel le paramètre opérationnel est l'un quelconque d'une vitesse de ventilateur, d'une vitesse de moteur électrique ou d'un couple de moteur électrique.

7. Procédé dans une unité de commande pour commander le fonctionnement d'un agencement de refroidissement dans un véhicule électrique lourd ou véhicule électrique hybride (100), l'unité de commande comprenant un moyen de prédiction aménagé pour prédire un besoin de refroidissement du véhicule (100), l'agencement de refroidissement (200) comprenant un ventilateur (230), un moyen de montage (220) et un moteur électrique (210), dans lequel le moteur électrique (210) est un moteur électrique à flux axial, le ventilateur (230) étant un agencement de ventilateur (500) comprenant un ensemble de ventilateur centrifuge (510), une turbine (540), un carénage d'entrée stationnaire (520) et un stator (530) comprenant une pluralité d'aubes de stator situées radialement ou semi-radialement à l'extérieur de la turbine, le procédé comprenant:
l'obtention (S1) d'un besoin de refroidissement prédit du véhicule (100) pour un temps futur (t) ; dans lequel
l'obtention (S1) d'un besoin de refroidissement prédit pour le temps futur (t) comprend l'obtention d'informations (S12) sur une vitesse du véhicule (100) au temps futur (t) et l'utilisation d'un modèle d'estimation de chaleur pour estimer (S11) une quantité de chaleur générée au temps futur (t) sur la base de la vitesse du véhicule (100) ; et/ou
l'obtention (S1) d'un besoin de refroidissement prédit pour le temps futur (t) comprend l'obtention d'informations (S12) sur une caractéristique du trajet du véhicule (100) au temps futur (t) et l'utilisation du modèle d'estimation de chaleur pour estimer (S11) la quantité de chaleur générée au temps futur (t) sur la base de la caractéristique du trajet du véhicule (100) ;
le calcul (S2) d'un paramètre opérationnel de l'agencement de refroidissement de telle sorte que l'effet de refroidissement généré lors de l'utilisation du paramètre opérationnel réponde au besoin de refroidissement prédit ; et
l'application (S3) du paramètre opérationnel calculé pour commander l'agencement de refroidissement.

8. Procédé selon la revendication 7, dans lequel le modèle d'estimation de chaleur est ajusté (S13) en fonction d'informations sur la quantité de chaleur générée pendant une opération antérieure du véhicule.

9. Procédé selon l'une quelconque des revendications 7 ou 8, dans lequel le calcul d'un paramètre opérationnel de l'agencement de refroidissement comprend l'utilisation (S21) d'un modèle de refroidissement, le modèle de refroidissement étant déterminé comme un modèle de la relation entre le paramètre opérationnel de l'agencement de refroidissement et un effet de refroidissement généré.

10. Procédé selon la revendication 9, dans lequel le modèle de refroidissement est ajusté (S22) en fonction d'informations sur l'effet de refroidissement généré pendant une opération antérieure du véhicule.

11. Unité de commande comprenant un moyen de prédiction agencé pour prédire un besoin de refroidissement d'un véhicule (100), l'unité de commande comprenant un circuit de traitement (810) configuré pour exécuter un procédé selon l'une quelconque des revendications 7 à 10.
